(19) Europäisches Patentamt
European Patent Office
Office européen des brevets

(11) **EP 3 286 855 B1**

(12) **EUROPEAN PATENT SPECIFICATION**

(45) Date of publication and mention
of the grant of the patent:
**20.03.2019 Bulletin 2019/12**

(21) Application number: **16720177.1**

(22) Date of filing: **20.04.2016**

(51) Int Cl.:
**H04B 17/309** *(2015.01)*

(86) International application number:
**PCT/IB2016/052235**

(87) International publication number:
**WO 2016/170482 (27.10.2016 Gazette 2016/43)**

(54) **MONITORING CHANGES IN AN ENVIRONMENT BY MEANS OF COMMUNICATION DEVICES**

ÜBERWACHUNG VON ÄNDERUNGEN IN EINER UMGEBUNG MITHILFE VON KOMMUNIKATIONSVORRICHTUNGEN

SURVEILLANCE DE CHANGEMENTS DANS UN ENVIRONNEMENT AU MOYEN DE DISPOSITIFS DE COMMUNICATION

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **20.04.2015 GB 201506665**

(43) Date of publication of application:
**28.02.2018 Bulletin 2018/09**

(73) Proprietor: **University of Cape Town**
**7700 Cape Town (ZA)**

(72) Inventor: **MISHRA, Amit Kumar**
**7700 Cape Town (ZA)**

(74) Representative: **Appleyard Lees IP LLP**
**15 Clare Road**
**Halifax HX1 2HY (GB)**

(56) References cited:
**EP-A1- 2 429 228     KR-A- 20120 136 128**
**US-A- 5 751 766**

EP 3 286 855 B1

**Description**

**CROSS REFERENCE TO RELATED APPLICATIONS**

This application claims priority from United Kingdom patent application number 1506665.7, filed on 20 April 2015.

**FIELD OF THE INVENTION**

This invention relates to monitoring changes in an environment, and particularly to systems and methods for monitoring changes in an environment by means of one or more communication devices.

**BACKGROUND TO THE INVENTION**

Radar systems are used widely to detect and range targets. Traditionally, radar systems provide a transmitter for transmitting an electromagnetic pulse and a receiver for receiving electromagnetic signals including reflections of the transmitted electromagnetic pulse. The reflections, often referred to as 'backscatter', may then be used to detect and range targets which are present in the scene (and off of which the transmitted pulse was reflected).

In order to detect and range targets, the reflections need to be identified in the received electromagnetic signal. Typically, this is achieved by correlating the transmitted pulse with the received signal.

In an effort to reduce the cost of radar systems, research (H. Griffiths and C. Baker, "Passive coherent location radar systems. part 1: performance prediction," in Radar, Sonar and Navigation, IEE Proceedings-, vol. 152, no. 3. IET, 2005, pp. 153-159 and M. Inggs and C. Tong, "Commensal radar using separated reference and surveillance channel configuration," Electronics Letters, vol. 48, no. 18, pp. 1158-1160, 2012) has been directed towards so-called commensal, or passive, radar systems which utilise transmitters of opportunity. The transmitters of opportunity may be frequency modulation (FM) broadcast towers, cell-phone towers and the like, which typically transmit a wireless communication signal. Such commensal radar systems typically include a receiver for receiving a scattered signal which includes reflections of the signal transmitted by the transmitter of opportunity. The commensal radar system may then be able to detect and range targets by correlating a portion of the transmitted signal with the received scattered signal.

There are, however, a number of challenges associated with obtaining the transmitted signal at the receiver (which is generally remote from the transmitter). It is important that the received scattered signal is free of the 'direct path' transmitted signal; a requirement which introduces further complications. Furthermore, commensal receivers may need to be specially designed as such, further increasing the cost and complexity of such systems.

There is accordingly a need to address the aforementioned problem and other problems. EP2429228A1 provides a network management system which includes: wireless link quality information collection means for collecting, from a mobile terminal that is connected to the mobile communication network, wireless link quality information that indicates wireless link quality measured by the mobile terminal, the wireless link quality information containing information about quality of wireless links between the mobile terminal and two or more wireless cells; coverage evaluation means for evaluating the wireless cell coverage on the basis of wireless link quality information calculated for each of the wireless cells using the wireless link quality information collected by the wireless link quality information collection means; and wireless parameter calculation means for calculating an amount of change in changing for a wireless parameter of a wireless base station on the basis of the result of the evaluation provided by the coverage evaluation means.

US5751766A provides a method and apparatus for non-invasively testing performance of a digital communication system. The test system finds particular application in digital broadcast systems where interruption of regular service for test purposes is impracticable. In one embodiment oriented to digital television cable broadcast systems, unwanted reflections due to loose connectors and other causes may be localized within a subscriber's home. The test system takes advantage of information typically generated by digital receivers to correct for communication channel imperfections. Examples of such information include current filter parameters computed for use in an internal adaptive equalizer, internal loop parameters, and the difference between the signal received and a reconstruction of that signal from the symbols estimated by the receiver.

KR20120136128A provides a wireless environment monitoring system, terminal device, and method to transmit wireless environment information to a network management server after collecting the wireless environment information. A measurement unit measures the strength of a radio wave transmitted by a terminal device. A determination unit determines whether the measured strength of the radio wave falls under the determined first strength. When the measured strength of the radio wave falls under the selected first strength, an information collection unit collects wireless environment information related to the radio wave. A storage unit stores the collected wireless environment information in a memory. An information transmission unit transmits the wireless environment information stored in the memory to a network management server.

The preceding discussion of the background to the invention is intended only to facilitate an understanding of the present invention. It should be appreciated that the discussion is not an acknowledgment or admission that any of the material referred to was part of the common general knowledge in the art as at the priority date of the application.

## SUMMARY OF THE INVENTION

The invention is defined in the appended set of claims.

In accordance with a first aspect there is provided a method of monitoring changes in a physical environment including objects by means of one or more communication devices within the environment, each of which is configured to receive a wireless communication signal transmitted from a source, the method conducted by a central computing device comprising: receiving, from each communication device, device data including channel equalisation information, the channel equalisation information being determined by the device performing channel equalisation on a wireless communication signal received by the communication device, wherein the channel equalisation information models the environment through which the wireless communication signal travels; using the received device data to generate an estimate of the environment including using the channel equalisation information model of the environment; and, recording changes in the generated estimate of the environment over time so as to monitor changes in the environment.

The source may be an already deployed telecommunication source, broadcasting source or the like.

Further features provide for the method to include a step of incorporating the received device data into a model representing the environment.

A yet further feature provides for the method to include a step of receiving device data relating to a known condition, the device data relating to a known condition having been obtained under controlled conditions.

A still further feature provides for the method to include: using the device data relating to a known condition to generate an estimate of the environment relating to the known condition; and, storing and labelling the estimate of the environment relating to the known condition.

Further features provide for the device data further to include a geographical location of the communication device, and for the channel equalisation information to include one or both of: filter coefficients and a trellis path.

A yet further feature provides for the filter coefficients to be adaptive filter coefficients, the adaptive filter coefficients having been obtained by the communication device applying an adaptive filter to adaptively equalise channel effects in the received wireless communication signal.

A still further feature provides for the trellis path to have been obtained by the communication device performing trellis decoding on the received wireless communication signal.

A further feature provides for recording changes in the generated estimate of the environment to include classifying patterns in the estimate of the environment.

A yet further feature provides for classifying patterns to further include: comparing the estimate of the environment to stored estimates of the environment corresponding to a known condition; and, based on the comparison, identifying a condition in the environment.

A still further feature provides for one or both of generating an estimate of the environment using the device data and classifying patterns to use an artificial neural network.

A further feature provides for the method to include a step of outputting information relating to the identified condition.

In accordance with a second aspect there is provided a method of monitoring changes in a physical environment including objects by means of one or more communication devices each of which is configured to receive a wireless communication signal transmitted from a source, the method conducted at a communication device comprising: receiving a wireless communication signal; performing channel equalisation on the received wireless communication signal to determine channel equalisation information, wherein the channel equalisation information models the environment through which the wireless communication signal travels; and, transmitting device data including the channel equalisation information to a central computing device for generating an estimate of the environment using the channel equalisation information model of the environment.

The wireless communication signal may be selected from a group including: a Global System for Mobile Communications (GSM) wireless communication signal, a Universal Mobile Telecommunications System (UMTS) wireless communication signal, a television (TV) wireless communication signal, an analogue TV wireless communication signal, a local area wireless computer networking wireless communication signal such as a Wireless-Fidelity (Wi-Fi™) wireless communication signal, and a whitespace wireless communication signal.

A further feature provides for the device data to further include a geographical location of the communication device.

Yet further features provide for performing channel equalisation on the received wireless communication signal to include applying an adaptive filter to adaptively equalise channel effects in the received wireless communication signal, and for the channel equalisation information to include adaptive filter coefficients obtained from the adaptive filter.

Still further features provide for performing channel equalisation on the received wireless communication signal to include performing trellis decoding on the received wireless communication signal to obtain a trellis path, and for the channel equalisation information to include the trellis path. A further feature provides for applying an adaptive filter to adaptively equalise channel effects in the received wireless communication signal to include: band-pass filtering the received wireless communication signal; performing time recovery to extract data frame timing information; using the data frame timing information to identify an information signal and a reference signal in the received wireless communication signal; training the adaptive filter, using the reference signal, to supress channel noise; and, outputting the coefficients of the adaptive filter.

A yet further feature provides for the method to include a further step of suppressing the bit error rate (BER) in the equalised signal using error correcting codes.

A still further feature provides for performing trellis decoding on the received wireless communication signal to obtain a trellis path to include: outputting a minimum entropy decoding trellis path which represents decoding required to extract information from the wireless communication signal with a minimum bit error rate.

In accordance with a third aspect there is provided a system for monitoring changes in a physical environment including objects by means of one or more communication devices, each of which is configured to receive a wireless communication signal transmitted from a source, the system comprising a central computing device which includes: a device data receiving component arranged to receive, from each communication device, device data including channel equalisation information, the channel equalisation information being determined by the device performing channel equalisation on a wireless communication signal received by the communication device, wherein the channel equalisation information models the environment through which the wireless communication signal travels; an estimate generating component arranged to use the received device data to generate an estimate of the environment including using the channel equalisation information model of the environment; and, a recording component arranged to record changes in the generated estimate of the environment over time so as to monitor changes in the environment.

Further features provide for the computing device to include an incorporating component arranged to incorporate the received device data into a model representing the environment.

A yet further feature provides for the computing device to include a training data receiving component arranged to receive device data relating to a known condition, the device data relating to a known condition having been obtained under controlled conditions.

Still further features provide for the estimate generating component further to be operable to use the device data relating to a known condition to generate an estimate of the environment relating to the known condition and for the central computing device to include a storing component arranged to store and label the estimate of the environment relating to the known condition.

Further features provide for the device data further to include a geographical location of the communication device, and for the channel equalisation information to include one or both of: filter coefficients and a trellis path.

A yet further feature provides for the filter coefficients to be adaptive filter coefficients, the adaptive filter coefficients having been obtained by the communication device applying an adaptive filter to adaptively equalise channel effects in the received wireless communication signal.

device performing trellis decoding on the received wireless communication signal.

A further feature provides for the recording component to include a pattern classification component arranged to perform pattern classification on the estimate of the environment.

A yet further feature provides for the pattern classification component to include: a comparison component arranged to compare the estimate of the environment to an estimated environment corresponding to a known condition; and, an identification component arranged to identify, based on the comparison, the condition.

A still further feature provides for one or both of the estimate generating component and the pattern classification component to use an artificial neural network.

In accordance with a fourth aspect there is provided a system for monitoring changes in an environment by means of one or more communication devices, each of which is configured to receive a wireless communication signal transmitted from a source, the system comprising a communication device including: a wireless communication signal receiving component arranged to receive a wireless communication signal; a channel equalising component arranged to perform channel equalisation on the received wireless communication ) signal to determine channel equalisation information; and, a device data transmitting component arranged to transmit device data including the channel equalisation information to a central computing device for generating an estimate of the environment.

The wireless communication signal may be selected from a group including: a Global System for Mobile Communications (GSM) wireless communication signal, a Universal Mobile Telecommunications System (UMTS) wireless communication signal, a television (TV) wireless communication signal, an analogue TV wireless communication signal, a local area wireless computer networking wireless communication signal such as a Wireless-Fidelity (Wi-Fi™) wireless communication signal, and a whitespace wireless communication signal.

Further features provide for the communication device to include a geographical location determining component arranged to determine a geographical location of the communication device, and for the device data transmitting component to further include the geographical location of the communication device in the transmitted device data.

Yet further features provide for the channel equalising component to include an adaptive filtering component arranged to apply an adaptive filter to adaptively equalise channel effects in the received wireless communication signal, and for the channel equalisation information to include adaptive filter coefficients obtained from the adaptive filter.

A still further feature provides for the channel equalising component to include a decision feedback equaliser for suppressing the bit error rate (BER) in the equalised signal using error correcting codes.

Further features provide for the channel equalising component to include a trellis decoder arranged to perform trellis decoding on the received wireless communication signal to obtain a trellis path, and for the channel equalisation information to include the trellis path of the trellis decoder.

A yet further feature provides for the trellis decoder to include a trellis path output component arranged to output a minimum entropy decoding trellis path which represents decoding required to extract information from the wireless communication signal with a minimum bit error rate.

A still further feature provides for the channel equalising component further to include: a band-pass filter for band-pass filtering the received wireless communication signal; a time recovery component arranged to perform time recovery to extract data frame timing information; an identification component arranged to use the data frame timing information to identify an information signal and a reference signal in the received wireless communication signal; and, a training component arranged to train, using the reference signal, the adaptive filter to supress channel noise.

In accordance with a fifth aspect there is provided a computer program product for monitoring changes in an environment by means of one or more communication devices within the environment, each of which is configured to receive a wireless communication signal transmitted from a source, the computer program product comprising a computer-readable medium having stored computer-readable program code for performing the steps of: receiving, from each communication device, device data including channel equalisation information, the channel equalisation information being determined by the device performing channel equalisation on a wireless communication signal received by the communication device; using the received device data to generate an estimate of the environment; and, recording changes in the generated estimate of the environment over time so as to monitor changes in the environment.

In accordance with a sixth aspect there is provided a computer program product for monitoring changes in an environment by means of one or more communication devices each of which is configured to receive a wireless communication signal transmitted from a source, the computer program product comprising a computer-readable medium having stored computer-readable program code for performing the steps of: receiving a wireless communication signal; performing channel equalisation on the received wireless communication signal to determine channel equalisation information; and, transmitting device data including the channel equalisation information to a central computing device for generating an estimate of the environment.

Further features provide for the computer-readable medium to be a non-transitory computer-readable medium and for the computer-readable program code to be executable by a processor.

An embodiment of the invention will now be described, by way of example only, with reference to the accompanying drawings.

## BRIEF DESCRIPTION OF THE DRAWINGS

In the drawings:

Figure 1    is a block diagram which illustrates a basic communication system;
Figure 2    is a schematic diagram which illustrates an exemplary system for monitoring changes in an environment;
Figure 3    is a block diagram which illustrates components of an exemplary system for monitoring changes in an environment;
Figure 4    is a swim-lane flow diagram which illustrates a method for monitoring changes in an environment;
Figure 5    is a schematic diagram which illustrates an experimental system; and,
Figure 6    is a plot which illustrates channel equalisation characteristics which were obtained using the experimental system illustrated in Figure 5.

## DETAILED DESCRIPTION WITH REFERENCE TO THE DRAWINGS

The systems and methods described herein provide what may be termed a commensal radar system' which utilises communication systems already deployed in the field. The described systems and methods may build upon existing communication systems to monitor the environment. Unlike conventional radar systems and commensal radar systems which typically perform correlation to detect and range targets, the described systems and methods utilise a reference signal in a received communication signal to estimate the channel (or equalise the channel) and thereby monitor changes in the environment. The systems and methods described herein may utilise channel estimation blocks employed by existing communication systems, for example mobile phones, to provide an environmental monitoring system capable of being deployed widely and relatively cheaply.

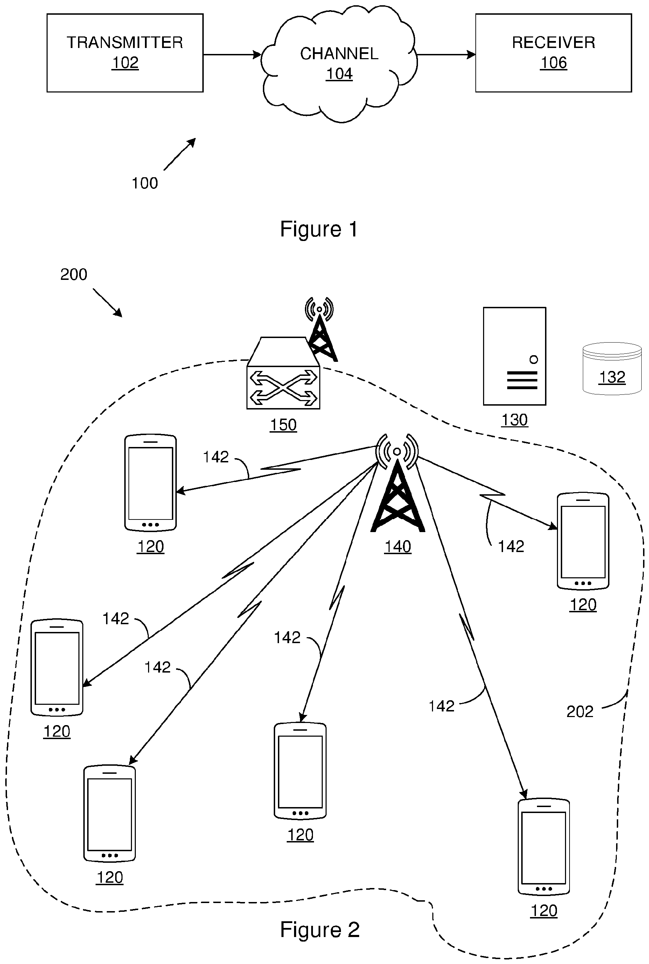

Figure 1 is a generic block diagram which illustrates a communication system (100). Generally, a communication system (100) aims to correctly estimate a signal transmitted from a transmitter (102), via a channel (104), to a receiver (106).

The channel (104) may refer to the environment through which the transmitted signal travels. A simple model may assume that the channel is linear, in which case the channel can be modelled as a band-pass filter. In other cases the channel can be modelled as being non-linear. The channel may have the effect of changing the transmitted signal and for this reason, communication systems typically try to correct for the effects of the channel. Compensating for non-linear channel effects can be more complicated and communication systems may use orthogonal frequency division multiplexing (OFDM), channel equalisation filters and error correction coding to do so. This process of correcting for (or making up for) the channel interference is called channel equalisation.

The channel (104) is typically assumed to be known. Communication systems use a range of processes and algorithms to estimate non-ergodic and fading channels in real time and try to filter out the effect of the same. The systems and methods described herein aim to estimate the channel noise for communication systems for the purposes of monitoring changes in the environment.

A brief discussion of the underlying theory on which the described systems and methods are based follows. For a conventional radar system working in monostatic configuration, the received signal, $x_r(t)$ can be modelled as follows:

$$x_r(t) = \oint_{Vill} \sigma((\vec{r})) x_t\left(t - \tau((\vec{r}))\right) d(\vec{r})$$

In the above expression, $x_t$ is the transmitted signal, *Vill* is the volume illuminated by the radar, $\sigma(\vec{r})$ is the scattering coefficient for a particular infinitesimal volume in the volume of integration and $\tau((\vec{r}))$ is the time delay for that volume element. It can be noted here that the systems and methods described herein focus on similarities and differences between radar and the communication systems. Hence, the common autoregressive white Gaussian noise (AWGN) has been ignored in the above model.

Now consider the received signal for a communication system (100), which is as follows:

$$x_r(t) = x_{rd}(t) + x_{rs}(t) = x_{rd}(t) + \oint_{Vill} \sigma((\vec{r})) x_t\left(t - \tau((\vec{r}))\right) d(\vec{r})$$

In the above expression, $x_{rd}$ is the direct signal as received by the receiver (106) through the line of sight direction of propagation while $x_{rs}$ is the received signal that has been scattered by the environment around the system and which has travelled through different scattering directions. For the communication system, $x_{rs}$ (the channel) is an undesired signal which is typically filtered out.

However, as can be seen, the secondary scattered channel part of the communication signal ($x_{rs}$) is similar to the received radar signal. Hence, it is possible to use an existing communication system as a limited radar system. It should also be noted here that most modern communication standards and the adhering equipment cater for some kind of dynamic channel estimation. These schemes use known pilot signals, also termed reference signals, in the received signal to estimate the channel and then filter the channel modulations out.

Based on the above observation, communication-based sensing systems and methods are proposed, which will estimate the channel characteristics (or $x_{rs}(t)$) from the received communication signal, and monitor and/or predict changes in the environment based on the change in the channel characteristics.

The systems described herein may be said to be 'commensal systems' in that they make use of existing (i.e. already deployed) communication systems without adversely affecting such systems. Thus, the described systems and methods may be easier to implement and may have a lower installation cost associated therewith. Exemplary applications include crop monitoring, disaster monitoring, security of large unmanned landscapes, and the like.

While conventional radar systems rely upon a back-scattered signal, the systems and methods described herein rely on both back-scattered and forward scattered signals. Hence, the described systems and methods may also be used in addition to a conventional radar system to bolster the amount of information acquired from the scene.

Turning now to Figure 2, in which a schematic diagram illustrates an exemplary system (200) for monitoring changes in an environment (202). The system (200) includes a number of communication devices (120) and a central computing device (130).

The communication devices (120) may be any appropriate electronic devices which are capable of wireless communication. In the illustrated embodiment, the communication devices (120) are mobile communication devices such as mobile phones. In other embodiments, the communication devices may be specifically configured and deployed electronic devices having hardware and software components enabling the described functionality which follows. Each communication device (120) is operable to receive a wireless communication signal (142) transmitted from a source (140), to equalise the channel associated with the received signal and to transmit device data including channel equalisation information to the central computing device (130).

In the illustrated embodiment, the source (140) is a cell-phone tower, or base transceiver station of a mobile telephony network, which is operable to communicate wirelessly with the communication devices (120). The source (140) includes an antenna and transceiver for at least transmitting wireless communication signals (142) to the communication devices (120). The wireless communication signals (142) may adhere to any appropriate wireless communication standard, such as Global System for Mobile Communications (GSM) or Universal Mobile Telecommunications System (UMTS) standards. In another embodiment, the transmitted signals may be analogue television (TV) signals, local area wireless computer networking wireless communication signals (e.g. Wireless-Fidelity (Wi-Fi™) communication signals) and the like.

The central computing device (130) may be any appropriate electronic computing device, such as a desktop or server computer. In some cases, the computing device (130) may be a cloud-based, clustered or distributed server computer. The central computing device (130) has access to a database (132) in which data may be stored and organised and from which data may be retrieved. The central computing device (130) is in data communication with the communication devices (120). In some embodiments, the central computing device (130) may be in data communication with the communication devices (120) via the source (140) and an underlying communication network infrastructure (150), for example, the Internet. In other cases, the computing device (130) may in data communication with the communication devices (120) via the communication network infrastructure (150) only.

The environment (202) which is monitored is the physical environment in which the communication devices (120) are located. In some cases, the environment is limited by the range at which the communication devices are able to receive the wireless communication signal (142) being transmitted from the source (140). The environment (202) may include objects such as trees, people, vehicles and the like. Changes in the environment which may be detected include fires, insurgent activity, floods, traffic conditions and the like.

The environment (202), or the scene of interest, may depend on the range of the communication devices. In systems which adhere to GSM standards, for example, this scene size may be more or less constant. Whereas in newer standards, such as Long-Term Evolution (LTE), this scene size may vary and may generally be confined to pico-cell sizes.

A pico-cell is a small cellular base station typically covering a small area, such as in-building (for example in offices, shopping malls, train stations, stock exchanges, etc.). In cellular networks, pico-cells are typically used to extend coverage to indoor areas where outdoor signals do not reach well, or to add network capacity in areas with very dense phone usage, such as train stations or stadiums. Pico-cells may provide coverage and capacity in areas difficult or expensive to reach using the more traditional macro-cell approach. In cases where the scene size is restricted to pico-cell sizes, repeaters may be provided to repeat the transmitted wireless signal (142).

It should also be noted that in some embodiments, fixed communication devices may be provided which may enable constant monitoring of a certain environment. Such devices may be configured only to receive wireless communication signals from the source. One exemplary communication device may be configured to utilise GSM wireless communication signals transmitted from a GSM source. For GSM, a detailed calculation can show that the power level at receiver for downlink is around -42.2dBm. Using low cost receivers (e.g. a FunCube Dongle™ or the like), wireless communication signals as low as -76.5dBm may be received. Hence, the link budget provides a sufficient window to receive the signal using low cost software defined radio (SDR) hardware, as will be illustrated below.

The described systems and methods estimate the channel using existing communication systems. However, such existing communication systems are generally not interested in the channel; they typically treat it as noise and filter it out. Thus, the described systems and methods aim to estimate the channel effect from the range of noise-effects that are filtered out by communication systems. The systems and methods described herein are designed to estimate $Vill$ and $\frac{\partial Vill}{\partial t}$ from the measured $\phi_{Vill}\sigma(\vec{(r)})x_t(t-\tau(\vec{(r)}))\vec{d}(r)$, which is a highly under-determined system. Furthermore, the described systems and methods map the information collected from the measurement to physical events or conditions in the scene.

The described systems and methods implement adaptive filtering techniques to estimate the channel signal, $x_{rs}(t)$ from the received signal $x_r(t)$. One approach is to use adaptive linear mean square (LMS) type algorithms, which have been used to filter out the channel effects (or in channel equalisation, as they are termed in communication-related literature) from communication signals. An often ignored property of the LMS filter is the fact that the filter is capable of being trained so as to adopt to the noise in the wireless communication signal. In other words it is a noise-suppression system rather than a signal-filtering system. Thus, the described systems and methods implement LMS filters to dynamically and adaptively equalise for the channel effects and, in so doing, obtain filter taps (or coefficients) which model the channel.

By measuring the channel from as many different places as possible, using a number of communication devices (120), problems associated with the under-determined nature of the system may be alleviated. The described systems and methods utilise multiple cooperative communication devices (120) in the region of interest which, in the case of mobile communication devices, transmit their geographical location and their respective LMS filter coefficients to the central computing device (130). The higher the number of cooperative communication devices present within the environment, the less under-determined the system will become.

The central computing device (130) may further be operable to implement a bio-inspired scheme that combines compressive sensing and application specific instrumentation (ASIN). Thus, as opposed to trying to estimate everything in the scene, the described systems and methods may instead estimate one or a few anomalies. This requires a priori knowledge of the environment. Hence, depending on the application of the systems and methods described herein, a set of field trials may be run to gather information or test data about any anomalies needing to be detected and characterised.

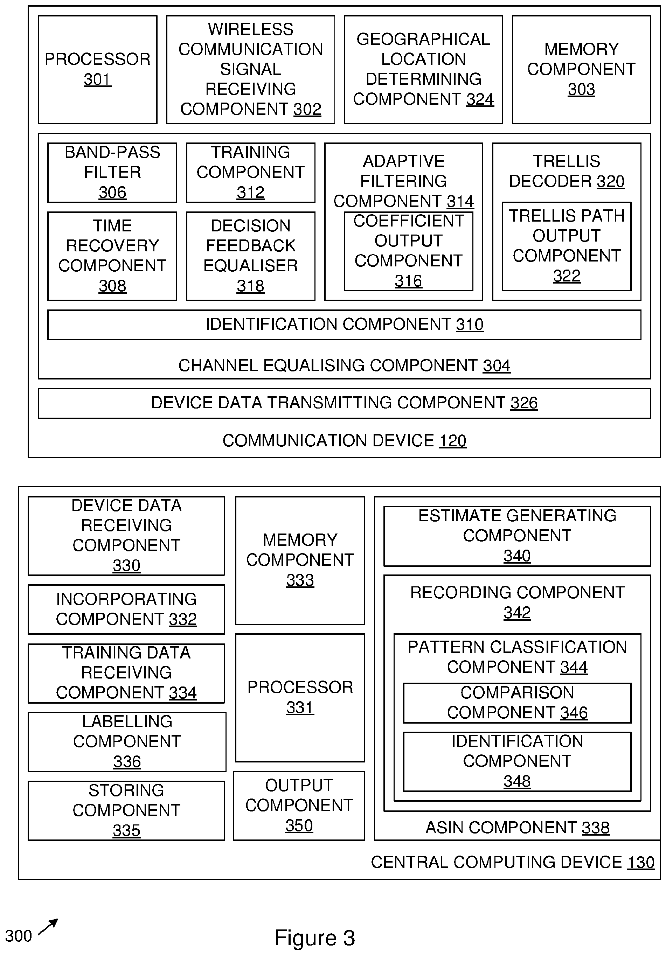

Devices of the system described above with reference to Figure 2 are described in greater detail in Figure 3. Figure 3 is a block diagram which illustrates components of a system (300) for monitoring changes in an environment. The system (300) includes an example of a communication device (120) and an example of a central computing device (130).

The communication device (120) may include a processor (301) for executing the functions of components described below, which may be provided by hardware or by software units executing on the communication device (120). The software units may be stored in a memory component (303) and instructions may be provided to the processor (301) to carry out the functionality of the described components.

The communication device (120) includes a wireless communication signal receiving component (302) arranged to receive a wireless communication signal from a source. The wireless communication signal receiving component (302) may include an antenna, a low noise amplifier and an analogue-to-digital converter to enable the wireless communication signal receiving component (302) to receive and digitise the signal.

The communication device (120) also includes a channel equalising component (304) arranged to perform channel equalisation on the received wireless communication signal and to thereby determine channel equalisation information. As mentioned above, the channel equalisation information may represent or model the channel and thus may be used to generate an estimate of the environment.

The channel equalising component (304) includes a band-pass filter (306) arranged to apply a band-pass filter to the received wireless communication signal so as to improve the signal-to-noise ratio thereof and a time recovery component (308) arranged to perform time recovery (also known as carrier recovery) to extract data frame timing information from the band-pass filtered signal. Most modern communication systems use coherent demodulation and hence need an exact carrier signal (i.e. exact phase). Performing time recovery may ensure that the constellation diagram of the phase codes appear to be dispersed as little as possible and in so doing correct for any phase error.

The channel equalising component (304) further includes an identification component (310) arranged to use the data frame timing information to identify an information signal and a reference signal in the band-pass filtered wireless communication signal.

The channel equalising component (304) also includes a training component (312) arranged to train, using the reference signal, an adaptive filter to supress channel noise, and an adaptive filtering component (314) arranged to apply an adaptive filter to the received wireless communication signal to adaptively equalise channel effects therein, thereby suppressing the channel noise.

The adaptive filtering component (314) may implement any appropriate adaptive filter, such as a finite impulse response (FIR) filter, a FIR filter implementing linear mean squares (LMS) (e.g. an LMS filter), or the like, to output an equalised signal. The adaptive filtering component (314) further includes a coefficient output component (316) arranged to output the coefficients of the adaptive filter. As discussed above, these coefficients represent the effect of the channel, or in other words, represent the spectral signature of the channel that they are used to equalise. Example coefficients, for the purposes of illustration, may have the form *[0.002234 0.022101 0.119822 0.102334]*. These may be trained coefficients and may not be symmetric.

The channel equalising component (304) further includes a decision feedback equaliser (318) arranged to suppress the bit error rate (BER) in the equalised signal using error correcting codes. Error correcting codes are used to reduce the BER, which is typically caused by channel interference.

Additionally, the channel equalising component (304) includes a trellis decoder (320) arranged to decode the supressed signal and minimize the channel at code level. In the illustrated embodiment, the trellis decoder (320) is a Viterbi decoder which implements Viterbi decoding on the suppressed signal and computes a trellis path of minimum entropy decoding which represents the decoding required to extract the information from the received wireless communication signal with a minimum BER. This trellis path sequence, once the signal has been decoded, also represents the effect of channel (or the state of the channel). The trellis decoder (320) includes a trellis path output component (322) arranged to output the minimum entropy decoding trellis path.

In the illustrated embodiment, the communication device (120) also includes a geographical location determining component (324) arranged to determine the geographical location of the communication device (120). The geographical location determining component (324) may include a global positioning system (GPS) receiver for determining the geographical location of the communication device. In other embodiments, the geographical location determining component (324) may retrieve a stored geographical location of the communication device (120) or may determine the geographical location of the communication device (120) by performing triangulation on received wireless communication signals. The geographical locations of communication devices may be used by the central computing device for triangulation or multilateration.

The communication device (120) further includes a device data transmitting component (326) arranged to transmit device data including the channel equalisation information and, in the illustrated embodiment, the geographical location of the communication device, to the central computing device (130). The channel equalisation information includes adaptive filter coefficients obtained from the adaptive filtering component (314) and the trellis path of the trellis decoder (320). The device data transmitting component (326) may transmit the device data to the central computing device (130) in a data message via an appropriate communication network infrastructure.

The central computing device (130) may include a processor (331) for executing the functions of components described below, which may be provided by hardware or by software units executing on the central computing device (130). The software units may be stored in a memory component (333) and instructions may be provided to the processor (331) to carry out the functionality of the described components.

The central computing device (130) includes a device data receiving component (330) arranged to receive device data including channel equalisation information and a geographical location from a number of communication devices (120). The device data receiving component (330) may receive the device data form the communication device (120) in a data message via an appropriate communication network infrastructure.

The computing device includes (130) includes an incorporating component (332) arranged to incorporate the received device data into a model representing the environment. The model may be an elevation map of the terrain of the environment, a map of the environment or the like. For example, the model may include or use data from a map application such as Google™ Earth™, any appropriate geographic information system (GIS) or the like. Furthermore, the model may include or use traffic data, weather data and any other data which may be applicable to the environment. Incorporating the received device data into a model may put the data into context and may also serve to localize the channel characteristics.

The computing device (130) further includes a training data receiving component (334) arranged to receive device data relating to a known condition which is obtained under controlled conditions. The device data relating to a known condition, which may be termed training data, received at the training data receiving component (334) may include channel equalisation information such as adaptive filter coefficients and trellis paths, obtained from a number of communication devices under controlled conditions. For example if the application is to detect the movement of vehicles in a secured area, then the training data can be collected from within the controlled area while passing a controlled number of vehicles at known time slots. The training data receiving component (334) may receive the device data form the communication device (120) in a data message via an appropriate communication network infrastructure.

The central computing device (130) also includes an application specific instrumentation (ASIN) component (338). The ASIN component (338) may be implemented using a back-propagation artificial neural network (e.g. an ANN with a single hidden layer) and may train itself using the data received from the training data receiving component (334) and output predictions in real-time based on data received from the device data receiving component (330).

The ASIN component (338) includes an estimate generating component (340) arranged to generate an estimate of the environment, or at least an area surrounding each communication device, using the device data received from the device data receiving component (330).

The estimate generating component (340) is further operable to use the device data relating to a known condition (which may also be referred to as training data) received from the training data receiving component (334) to generate an estimate of the environment relating to the known condition. The estimate generating component (340) may use geographical locations of communication devices received with the device data relating to a known condition in generating the estimate.

The central computing device (130) further includes a labelling component (336) arranged to label the estimate of the environment relating to the known condition with ground truth data relating to the known condition. For example, if two cars are driven in the environment during training, the obtained estimate of the environment relating to the known condition will be labelled with a label of TWO-VEHICLES or any other appropriate label to output labelled training data.

The central computing device (130) includes a storing component (335) arranged to store estimates of the environment relating to known conditions in a database. The storing component (335) associates the stored estimates with a label corresponding to the known condition. For example, an estimate of the environment generated from training data received while a fire is burning in the environment may be stored and associated with a 'fire' label. In this way, a number of known conditions may be built up and stored in the database for later comparison and matching with 'real-time' or 'test' device data such that the environment may be monitored and conditions in the environment identified.

The ASIN component (338) further includes a recording component (342) arranged to record changes in the generated estimate of the environment over time so as to monitor changes in the environment. The recording component (342) includes a pattern classification component (344) arranged to perform pattern classification on the estimate of the environment. The pattern classification component (344) includes a comparison component (346) arranged to compare the estimate of the environment to one or more stored estimates of the environment corresponding to known conditions and an identification component (348) arranged to identify the condition based on the comparison.

The central computing device (130) also includes an output component (350) arranged to output information relating to the identified condition.

As described above, the ASIN component (338) may run in two phases. In the training phase, training data from the training data receiving component (334) is used to train the artificial neural network. The training data utilised may vary depending on the application for which the system is being trained. In the test phase, or real-time phase, the data received from the device data receiving component (330), and optionally from the incorporating component (332) are fed to the artificial neural network which, in turn, predicts the presence (or absence) of an event and/or condition which the artificial neural network has been trained to detect or monitor. The output may include two sets of information. Firstly, it may provide a likelihood of a particular condition and/or event occurring. And secondly, given that the likelihood of that condition and/or event is high enough, it may provide some basic characteristics of the condition and/or event as well.

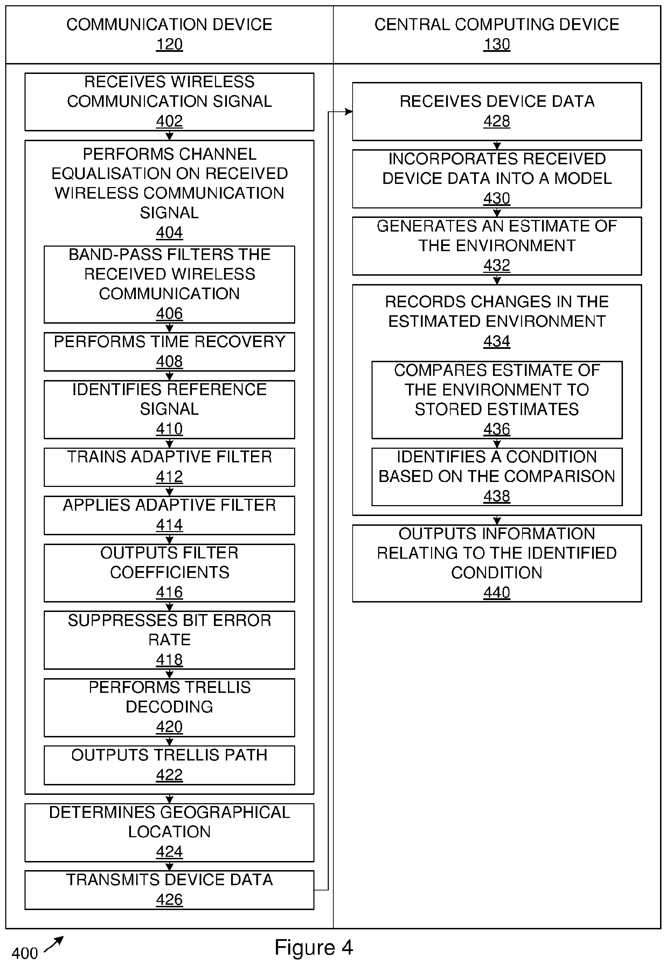

Figure 4 is a swim-lane flow diagram which illustrates an example method (400) for monitoring changes in an environment by means of a number of communication devices within the environment. The Figure illustrates steps conducted at a communication device (120) and a central computing device (130). It should be appreciated that although only one communication device is shown, in an implementation of the method there may be more than one.

The communication device (120) receives (402) a wireless communication signal being transmitted from a source. The wireless communication signal may be a GSM, UMTS or any other suitable wireless communication signal.

The communication device (120) performs (404) channel equalisation on the received wireless communication signal to determine channel equalisation information.

Performing (404) channel equalisation may include band-pass filtering (406) the received wireless communication signal and performing time recovery (408) on the band-pass filtered signal to extract data frame timing information. The data frame timing information is used (410) to identify an information signal and a reference signal in the received wireless communication signal. The reference signal is then used (412) to train the adaptive filter to supress channel noise. An adaptive filter is applied (414) to adaptively equalise channel effects in the received wireless communication signal. The adaptive filter may be a FIR filter, LMS filter or any other appropriate filter. The coefficients of the adaptive filter are then output at a following stage (416).

Performing (404) channel equalisation includes suppressing (418) the bit error rate (BER) in the equalised signal using error correcting codes. Trellis decoding on the received wireless communication signal is performed (420) in order to obtain a trellis path. In the illustrated embodiment, performing trellis decoding implements Viterbi decoding. A minimum entropy decoding trellis path which represents decoding required to extract information from the wireless communication signal with a minimum bit error rate is output (422).

A geographical location of the communication device is determined (424) and, device data including the channel equalisation information and geographical location of the communication device are transmitted (426) to the central computing device (130) for performing pattern classification to monitor changes in the environment. The transmitted channel equalisation information includes the output adaptive filter coefficients obtained from the adaptive filter and the trellis path output from the trellis decoder. It should be appreciated that the device data may constitute small amounts of data, for example 20 to 60 numbers every 10-20ms, so as to minimize communication overheads.

The central computing device (130), receives (428) the device data from the communication device (120). The received device data includes the channel equalisation information determined by the communication device (120) performing channel equalisation on the wireless communication signal. In a practical implementation, receiving (428) device data may receive device data from a plurality of communication devices.

The central computing device (130) incorporates (430) the received device data into a model, which may, for example, be an elevation map of the terrain or any other appropriate model relating to the environment.

The central computing device (130), uses (432) the received device data and optionally the incorporated data to generate an estimate of the environment. In some implementations, the central computing device (130) may perform principal component analysis (PCA) to extract features from the received device data.

The computing device (130) records (434) changes in the generated estimate of the environment over time so as to monitor changes in the environment. Recording (434) changes in the generated estimate of the environment includes performing pattern classification on the estimate of the environment. Performing pattern classification includes comparing (436) the estimate of the environment to stored estimates of the environment corresponding to a known condition identifying (438) a condition in the environment based on the comparison.

Generating an estimate of the environment using the device data and performing pattern classification may use an artificial neural network.

The central computing device outputs (440) information relating to the identified condition. The information relating to the condition may include the type of condition, characteristics or features of the condition and the like. Outputting the information relating to the identified condition may include transmitting a notification to a user terminal indicating the identification of the condition and including associated information relating to condition.

The stages described above with reference to Figure 4 relate to a system operating in the test or real-time mode. However, before the system can operate in the test mode, the system should be trained. Training involves conducting most or all of stages (402) to (432) under controlled conditions in which a particular condition is known to be present in the environment. For example, training stages may include receiving device data relating to a known condition from the communication device, where the device data relating to a known condition has been obtained by the communication device under controlled conditions. At a following stage the device data relating to a known condition is used to generate an estimate of the environment relating to the known condition and, at a following stage the estimate of the environment relating to the known condition is stored and associated with a label (e.g. identifying the condition) such that stored estimates can be used to compare real-time, or test, data against so as to identify a condition.

It should be noted that the above discussion generally refers to only a single communication device. However, this is for illustrative purposes only, and in a practical implementation there may be many communication devices, the device data of each of which may be received at the central computing device and used to generate an estimate of the environment, record changes in the environment and the like.

Exemplary applications of the described systems and methods include monitoring large areas with sparse inhabitation, for example forested areas. If such an area has any kind of communication infrastructure or broadcast infrastructure, then the described systems and methods can be used to give indications of large scale change in the surroundings (which can be because of disaster like forest fire, activity of militant groups and the like).

A further application includes monitoring traffic. In such an implementation, channel information may be collected from multiple mobile phone users and used to evaluate the amount of scattering material in the surroundings. Because most of the wireless communication signal penetrates obstacles (such as walls and trees) such an implementation can also be used for disaster recovery and insurgent scenarios.

The systems and methods described herein may obviate a need for communication devices and/or the central computing device to obtain a copy or replica of the transmitted signal as it was transmitted from the source (i.e. before it was distorted by the channel). This may be advantageous in reducing design complexity, especially in comparison with conventional radar systems and/or commensal (or passive) radar systems which typically require an exact replica of the transmitted signal. This in turn may enable the communication-based radar system according to the systems and methods described herein to be cheaper to design and/or produce.

A further advantage lies in that commensal (or passive) radar systems generally require separate, specially designed receiver systems which can be complicated and expensive to produce. However, the communication-based radar system described herein utilises a standard communication receiver design up until the transport layer (i.e. data in the wireless communication signal is not decrypted). This means that standard off-the-shelf communication devices (e.g. cell phone or mobile phone) can be used as receivers, without having to perform any hardware changes.

Yet another advantage of the systems and methods described herein is that the techniques employed by communication systems to compensate for channel interference typically use sophisticated coding. These techniques can be used in the described systems and methods to obtain information which is complimentary to what can be obtained from commensal (or passive) radars.

It should be appreciated that various modifications and alterations can be made to the exemplary systems and methods described herein without departing from the scope of the invention. For example, the systems and methods may be modified to work with analogue TV sources. Analog TV transmission typically does not send any reference signal for channel equalisation. However, in analogue TV the logo of the broadcast company is generally transmitted. This is a constant set of pixels which is known in advance and can thus be used with what is received at a given instant to characterise the channel. The ASIN framework described herein need not be changed. Furthermore, the described systems and methods can be configured to utilise recently proposed Whitespace technology. The benefit of this would be the fact that to operate in this band of frequencies licences are generally not required. Secondly these are very high frequency (VHF) bands and hence the wireless communication signal transmitted from the Whitespace source will better penetrate foliage. Such a combination may be well suited to tracking illegal movements under plant cover and also for controlling animal poaching.

The systems and methods described herein provide a different kind of radar system which utilises already installed communication systems to sense the environment. Such systems and methods will be useful as a low cost solution to environment monitoring and also as a supplementary system to existing radar systems.

Results obtained from experimental system

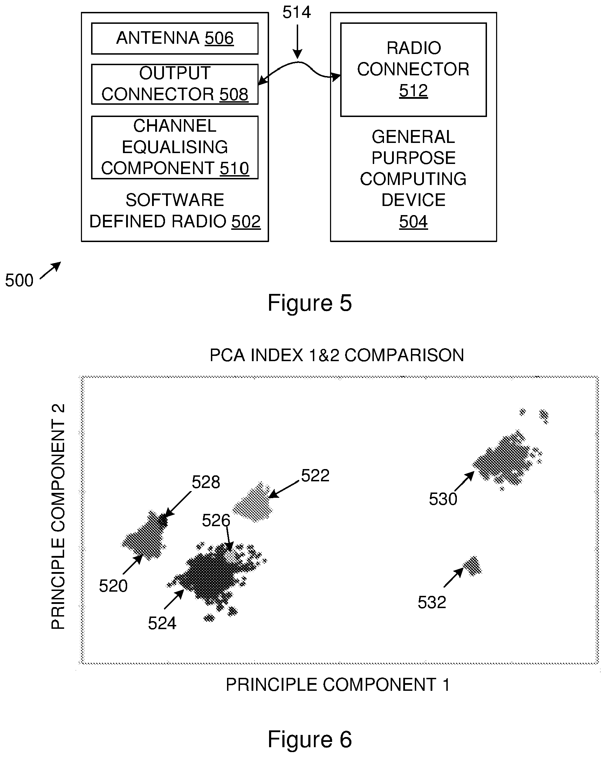

An experimental system (500), illustrated schematically in Figure 5, was designed in which a low-cost software defined radio (SDR) (502) connected to a general purpose computing device (504) performed the role of the communication device described herein. The experimental system utilised a laptop computing device as the general purpose computing device, although a credit card-sized, single-board computing device could also be used.

The software defined radio (502) is capable of transmitting and receiving Global System for Mobile Communications (GSM), in this case being second generation (2G), wireless communication signals and includes an antenna (506) and an output connector (508) for connecting to the general purpose computing device (504). The software defined radio (502) provides a channel equalising component (510) (which may also be referred to as a channel estimation filter) which is arranged to perform channel equalisation on wireless communication signals received via the antenna (506).

The general purpose computing device (504) includes a radio connector (512) for connecting to the software defined radio (502). A cable (514) connects the radio connector (512) to the output connector (508) to thereby provide electrical communication between the general purpose computing device (504) and the software defined radio (502). The general purpose computing device (504) is arranged to obtain channel characteristics (e.g. channel equalisation information such as filter coefficients and/or trellis paths) output by the channel equalising component (510) of the software defined radio (502).

In the experiment, the general purpose computing device (504) and the software defined radio (502) were deployed in various environments. Figure 6 is a plot which illustrates the characteristics of the channel obtained from the channel equalising component (508). Principal component analysis was performed on the obtained characteristics in order to convert the possibly correlated data into a set of linearly uncorrelated variables (principal components). In this experiment, principal component analysis was used as a visualisation tool, although in other implementations it may be used as a feature extraction tool to extract features from the channel characteristics.

Figure 6 shows several clusters of points. The first cluster (520) corresponds to characteristics obtained from a first location being at a train station without a train in proximity. The second cluster (522) corresponds to characteristics obtained from the first location with a train in proximity. The third cluster (524) corresponds to characteristics obtained from a second location being on a beach with the antenna facing towards the sea. The fourth cluster (526) corresponds to characteristics obtained from a third location being midway up a mountain at a height approximately 500 metres above sea level. The fifth cluster (528) corresponds to characteristics obtained from a fourth location being at the entrance of a three floor building. The sixth cluster (530) corresponds to characteristics obtained from a fifth location being on top of a ten metre high rock at a beach. The seventh cluster (532) corresponds to characteristics obtained from a sixth location being at a road next to a steep embankment

Figure 6 illustrates clearly defined clusters for respective locations. Clearly defined clusters are also obtained for the same location when an object is present or not. The clusters evident in Figure 6 demonstrate that the channel characteristics can be used to distinguish between different environments and possibly events which take place in the environments.

The foregoing description has been presented for the purpose of illustration; it is not intended to be exhaustive or to limit the invention to the precise forms disclosed. Persons skilled in the relevant art can appreciate that many modifications and variations are possible in light of the above disclosure.

Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. The described operations may be embodied in software, firmware, hardware, or any combinations thereof.

The software components or functions described in this application may be implemented as software code to be executed by one or more processors using any suitable computer language such as, for example, Java™, C++, or Perl™ using, for example, conventional or object-oriented techniques. The software code may be stored as a series of instructions, or commands on a non-transitory computer-readable medium, such as a random access memory (RAM), a read-only memory (ROM), a magnetic medium such as a hard-drive, or an optical medium such as a CD-ROM. Any such computer-readable medium may also reside on or within a single computational apparatus, and may be present on or within different computational apparatuses within a system or network.

Any of the steps, operations, or processes described herein may be performed or implemented with one or more hardware or software modules, alone or in combination with other devices. In one embodiment, a software module is implemented with a computer program product comprising a non-transient computer-readable medium containing computer program code, which can be executed by a computer processor for performing any or all of the steps, operations, or processes described.

Throughout the specification and claims unless the contents requires otherwise the word 'comprise' or variations such as 'comprises' or 'comprising' will be understood to imply the inclusion of a stated integer or group of integers but not the exclusion of any other integer or group of integers.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

**1.** A method of identifying a condition in a physical environment by means of a communication-based radar system including one or more communication devices (120) within the environment, each of which is configured to receive a wireless communication signal transmitted from a source, and a central computing device (130), the method comprising the following steps at the central computing device:

receiving (428), from each communication device (120), device data including channel equalisation information, the channel equalisation information being determined by the device performing channel equalisation on a wireless communication signal received by the communication device (120), wherein the channel equalisation information models the channel through which the wireless communication signal travels;
using (432) the received device data to generate an estimate of the environment including using the channel equalisation information; and,
recording (434) changes in the generated estimate of the environment over time so as to monitor changes in the environment, including classifying patterns in the estimate of the environment by comparing (436) the estimate of the environment to stored estimates of the environment corresponding to a known condition and, based on the comparison, identifying (438) the condition in the environment including the presence or absence of an object in the environment.

**2.** The method as claimed in claim 1, including incorporating (430) the received device data into a model representing the environment.

**3.** The method as claimed in any one of the preceding claims, wherein the device data further includes a geographical location of the communication device (120), and wherein the channel equalisation information includes one or both of: filter coefficients and a trellis path.

**4.** The method as claimed in claim 3, wherein the filter coefficients are adaptive filter coefficients, the adaptive filter coefficients having been obtained by the communication device (120) applying an adaptive filter to adaptively equalise channel effects in the received wireless communication signal.

**5.** The method as claimed in either claim 3 or 4, the trellis path having been obtained by the communication device (120) performing trellis decoding on the received wireless communication signal.

**6.** The method as claimed in claim 1, wherein one or both of generating an estimate of the environment using the device data and classifying patterns uses an artificial neural network.

**7.** The method as claimed in claim 6, wherein the method includes a step of outputting (40) information relating to the identified condition, wherein the information relating to the condition includes one or both of the type of condition and characteristics or features of the condition.

**8.** The method as claimed in any one of the preceding claims, including a method conducted at a communication device comprising:

receiving (402) a wireless communication signal;
performing (404) channel equalisation on the received wireless communication signal to determine channel equalisation information, wherein the channel equalisation information models the environment through which the wireless communication signal travels; and,
transmitting (426) device data including the channel equalisation information to the central computing device (130).

9. The method as claimed in claim 8, wherein performing channel equalisation on the received wireless communication signal includes:
performing (420) trellis decoding on the received wireless communication signal to obtain a trellis path, and wherein the channel equalisation information includes the trellis path.

10. The method as claimed in claim 9, wherein performing trellis decoding on the received wireless communication signal to obtain a trellis path includes:
outputting (422) a minimum entropy decoding trellis path which represents decoding required to extract information from the wireless communication signal with a minimum bit error rate.

11. The method as claimed in any one of claims 8 to 10, wherein performing channel equalisation on the received wireless communication signal includes:

applying (414) an adaptive filter to adaptively equalise channel effects in the received wireless communication signal, wherein the channel equalisation information includes adaptive filter coefficients obtained from the adaptive filter,
and wherein applying an adaptive filter to adaptively equalise channel effects in the received wireless communication signal includes:

band-pass filtering (406) the received wireless communication signal;
performing (408) time recovery to extract data frame timing information;
using (410) the data frame timing information to identify an information signal and a reference signal in the received wireless communication signal;
training (412) the adaptive filter, using the reference signal, to supress channel noise; and,
outputting (416) the coefficients of the adaptive filter.

12. A communication-based radar system for identifying a condition in a physical environment including objects by means of one or more communication devices (120), each of which is configured to receive a wireless communication signal transmitted from a source, the system comprising a central computing device (130) which includes:

a device data receiving component (330) arranged to receive, from each communication device (120), device data including channel equalisation information, the channel equalisation information being determined by the device performing channel equalisation on a wireless communication signal received by the communication device (120), wherein the channel equalisation information models the channel through which the wireless communication signal travels;
an estimate generating component (340) arranged to use the received device data to generate an estimate of the environment including using the channel equalisation information; and,
a recording component (342) arranged to record changes in the generated estimate of the environment over time so as to monitor changes in the environment, including classifying patterns in the estimate of the environment by comparing (436) the estimate of the environment to stored estimates of the environment corresponding to a known condition and, based on the comparison, identifying (438) the condition in the environment including the presence or absence of an object in the environment.

13. The system as claimed in claim 12, in which each communication device (120) includes:

a wireless communication signal receiving component (302) arranged to receive the wireless communication signal;
a channel equalising component (304) arranged to perform channel equalisation on the received wireless communication signal to determine channel equalisation information; and,
a device data transmitting component (326) arranged to transmit the device data including the channel equalisation information to the central computing device (130) for generating the estimate of the environment.

**Patentansprüche**

1. Verfahren zum Identifizieren einer Bedingung in einer physikalischen Umgebung mittels eines kommunikationsbasierten Radarsystems, das außer einer zentralen Rechenvorrichtung (130) noch ein oder mehrere Kommunikationsgeräte (120) innerhalb der Umgebung enthält, von denen jedes dazu ausgelegt ist, ein von einer Quelle übertragenes Drahtloskommunikationssignal zu empfangen, wobei das Verfahren die folgenden Schritte an der zentralen Rechenvorrichtung umfasst:

Empfangen (428), von jedem Kommunikationsgerät (120), von Gerätedaten, die Kanalentzerrungsinformationen enthalten, wobei die Kanalentzerrungsinformationen von dem Gerät bestimmt werden, das Kanalentzerrung an einem von dem Kommunikationsgerät (120) empfangenen Drahtloskommunikationssignal durchführt, wobei die Kanalentzerrungsinformationen den Kanal, durch den das Drahtloskommunikationssignal läuft, modellieren; Verwenden (432) der empfangenen Daten, um eine Schätzung der Umgebung, einschließlich der Verwendung der Kanalentzerrungsinformationen, zu erzeugen; und,

Aufzeichnen (434) von Veränderungen in der erzeugten Schätzung der Umgebung mit der Zeit, um Veränderungen in der Umgebung zu überwachen, einschließlich Klassifizieren von Mustern in der Schätzung der Umgebung durch Vergleichen (436) der Schätzung der Umgebung mit gespeicherten Schätzungen der Umgebung, die einer bekannten Bedingung entsprechen, und, auf der Basis des Vergleichs, Identifizieren (438) der Bedingung in der Umgebung, einschließlich der Anwesenheit oder Abwesenheit eines Objekts in der Umgebung.

2. Verfahren nach Anspruch 1, welches das Einbeziehen (430) der empfangenen Daten in ein die Umgebung repräsentierendes Modell einschließt.

3. Verfahren nach einem der vorhergehenden Ansprüche, wobei die Gerätedaten ferner eine geografische Lage des Kommunikationsgerätes (120) enthalten, und wobei die Kanalentzerrungsinformationen eines oder beides von Folgendem enthalten: Filterkoeffizienten und einen Trellis-Pfad.

4. Verfahren nach Anspruch 3, wobei die Filterkoeffizienten adaptive Filterkoeffizienten sind und die adaptiven Filterkoeffizienten von dem Kommunikationsgerät (120) erhalten worden sind, indem ein adaptiver Filter angewandt wurde, um Kanaleffekte in dem empfangenen Drahtloskommunikationssignal adaptiv zu entzerren.

5. Verfahren nach Anspruch 3 oder 4, wobei der Trellis-Pfad von dem Kommunikationsgerät (120) erhalten worden ist, indem Trellis-Decodierung an dem empfangenen Drahtloskommunikationssignal durchgeführt wurde.

6. Verfahren nach Anspruch 1, wobei ein oder beide Vorgänge des Erzeugens einer Schätzung der Umgebung unter Verwendung der Gerätedaten und Klassifizierungsmuster ein künstliches neuronales Netzwerk verwenden.

7. Verfahren nach Anspruch 6, wobei das Verfahren einen Schritt des Ausgebens (40) von Informationen bezüglich der identifizierten Bedingung enthält, wobei die Informationen bezüglich der Bedingung eines oder beides der Art von Bedingung und Eigenschaften oder Merkmale der Bedingung enthalten.

8. Verfahren nach einem der vorhergehenden Ansprüche, das ein an einem Kommunikationsgerät durchgeführtes Verfahren beinhaltet, das Folgendes umfasst:

Empfangen (402) eines Drahtloskommunikationssignals; Durchführen (404) einer Kanalentzerrung an dem empfangenen Drahtloskommunikationssignal, um Kanalentzerrungsinformationen zu bestimmen, wobei die Kanalentzerrungsinformationen die Umgebung, durch die das Drahtloskommunikationssignal läuft, modellieren; und, Übertragen (426) von Gerätedaten, welche die Kanalentzerrungsinformationen enthalten, zu der zentralen Rechenvorrichtung (130).

9. Verfahren nach Anspruch 8, wobei das Durchführen von Kanalentzerrung an dem empfangenen Drahtloskommunikationssignal Folgendes umfasst: Durchführen (420) von Trellis-Decodierung an dem empfangenen Drahtloskommunikationssignal, um einen Trellis-Pfad zu erhalten, und wobei die Kanalentzerrungsinformationen den Trellis-Pfad enthalten.

10. Verfahren nach Anspruch 9, wobei das Durchführen von Trellis-Decodierung an dem empfangenen Drahtloskommunikationssignal zum Erhalten eines Trellis-Pfads Folgendes beinhaltet: Ausgeben (422) eines minimalen Entropiedecodierungs-Trellis-Pfads, der Decodierung repräsentiert, die erforderlich ist, um Informationen aus dem Drahtloskommunikationssignal mit einer minimalen Bitfehlerrate zu extrahieren.

11. Verfahren nach einem der Ansprüche 8 bis 10, wobei das Durchführen von Kanalentzerrung an dem empfangenen Drahtloskommunikationssignal Folgendes umfasst:

Anwenden (414) eines adaptiven Filters, um Kanaleffekte in dem empfangenen Drahtloskommunikationssignal adaptiv zu entzerren, wobei die Kanalentzerrungsinformationen von dem adaptiven Filter erhaltene adaptive Filterkoeffizienten enthalten,
und wobei das Anwenden eines adaptiven Filters, um Kanaleffekte in dem empfangenen Drahtloskommunikationssignal adaptiv zu entzerren, Folgendes umfasst:

Bandpassfiltern (406) des empfangenen Drahtloskommunikationssignals;
Durchführen (408) von Zeitrückgewinnung, um Datenrahmen-Zeitinformationen zu extrahieren;
Verwenden (410) der Datenrahmen-Zeitinformationen, um ein Informationssignal und ein Referenzsignal in dem empfangenen Drahtloskommunikationssignal zu identifizieren;
Abrichten (412) des adaptiven Filters unter Verwendung des Referenzsignals, um Kanalrauschen zu unterdrücken; und,
Ausgeben (416) der Koeffizienten des adaptiven Filters.

12. Kommunikationsbasiertes Radarsystem zum Identifizieren einer Bedingung in einer physikalischen Umgebung, die Objekte enthält, mithilfe von einem oder mehreren Kommunikationsgeräten (120), von denen jedes dazu ausgelegt ist, ein von einer Quelle übertragenes Drahtloskommunikationssignal zu empfangen, wobei das System eine zentrale Rechenvorrichtung (130) umfasst, die Folgendes einschließt:

eine Gerätedaten-Empfangskomponente (330), die dazu ausgebildet ist, von jedem Kommunikationsgerät (120) Gerätedaten zu empfangen, die Kanalentzerrungsinformationen enthalten, wobei die Kanalentzerrungsinformationen von dem Gerät bestimmt werden, das Kanalentzerrung an einem von dem Kommunikationsgerät (120) empfangenen Drahtloskommunikationssignal durchführt, wobei die Kanalentzerrungsinformationen den Kanal, durch den das Drahtloskommunikationssignal läuft, modellieren;
eine Schätzungserzeugungskomponente (340), die dazu ausgebildet ist, die empfangenen Daten zu verwenden, um eine Schätzung der Umgebung, einschließlich der Verwendung der Kanalentzerrungsinformationen, zu erzeugen; und,
eine Aufzeichnungskomponente (342), die dazu ausgebildet ist, Veränderungen in der erzeugten Schätzung der Umgebung mit der Zeit aufzuzeichnen, um Veränderungen in der Umgebung zu überwachen, einschließlich Klassifizieren von Mustern in der Schätzung der Umgebung durch Vergleichen (436) der Schätzung der Umgebung mit gespeicherten Schätzungen der Umgebung, die einer bekannten Bedingung entsprechen, und, auf der Basis des Vergleichs, Identifizieren (438) der Bedingung in der Umgebung, einschließlich der Anwesenheit oder Abwesenheit eines Objekts in der Umgebung.

13. System nach Anspruch 12, in dem jedes Kommunikationsgerät (120) Folgendes einschließt:

eine Komponente (302) zum Empfangen eines Drahtloskommunikationssignals, die dazu ausgebildet ist, das Drahtloskommunikationssignal zu empfangen;
eine Kanalentzerrungskomponente (304), die dazu ausgebildet ist, Kanalentzerrung an dem empfangenen Drahtloskommunikationssignal durchzuführen, um Kanalentzerrungsinformationen zu bestimmen; und,
eine Gerätedaten-Sendekomponente (326), die dazu ausgebildet ist, die Gerätedaten, welche die Kanalentzerrungsinformationen enthalten, zu der zentralen Rechenvorrichtung (130) zu übertragen, um die Schätzung der Umgebung zu erzeugen.

**Revendications**

1. Procédé d'identification d'une condition dans un environnement physique au moyen d'un système radar basé sur une communication comprenant un ou plusieurs dispositifs de communication (120) dans l'environnement, dont chacun est conçu pour recevoir un signal de communication sans fil émis par une source, et un dispositif informatique central (130), le procédé comprenant, au niveau du dispositif informatique central, les étapes suivantes consistant à :

recevoir (428), en provenance de chaque dispositif de communication (120), des données de dispositif comprenant des informations d'égalisation de canal, les informations d'égalisation de canal étant déterminées par le dispositif qui réalise une égalisation de canal sur un signal de communication sans fil reçu par le dispositif de communication (120), dans lequel les informations d'égalisation de canal modélisent le canal par lequel se déplace le signal de communication sans fil ;
utiliser (432) les données de dispositif reçues pour générer une estimation de l'environnement y compris en utilisant les informations d'égalisation de canal ; et,

enregistrer (434) des changements de l'estimation générée de l'environnement au fil du temps de façon à surveiller des changements de l'environnement, consistant à classer des motifs dans l'estimation de l'environnement en comparant (436) l'estimation de l'environnement avec des estimations de l'environnement mémorisées correspondant à une condition connue, et, sur la base de la comparaison, à identifier (438) la condition dans l'environnement comprenant la présence ou l'absence d'un objet dans l'environnement.

2. Procédé selon la revendication 1, consistant à incorporer (430) les données de dispositif reçues dans un modèle représentant l'environnement.

3. Procédé selon l'une des revendications précédentes, dans lequel les données de dispositif comprennent en outre un emplacement géographique du dispositif de communication (120), et dans lequel les informations d'égalisation de canal comprennent un ou les deux parmi : des coefficients de filtre et un trajet en treillis.

4. Procédé selon la revendication 3, dans lequel les coefficients de filtre sont des coefficients de filtre adaptatif, les coefficients de filtre adaptatif ayant été obtenus par le dispositif de communication (120) en appliquant un filtre adaptatif afin d'égaliser de façon adaptative les effets de canal dans le signal de communication sans fil reçu.

5. Procédé selon la revendication 3 ou 4, le trajet en treillis ayant été obtenu par le dispositif de communication (120) qui réalise un décodage en treillis sur le signal de communication sans fil reçu.

6. Procédé selon la revendication 1, dans lequel la génération d'une estimation de l'environnement à l'aide des données de dispositif et/ou la classification de motifs utilisent un réseau neuronal artificiel.

7. Procédé selon la revendication 6, le procédé comprenant une étape consistant à sortir (40) des informations relatives à la condition identifiée, les informations relatives à la condition comprenant le type de condition et/ou les caractéristiques ou fonctionnalités de la condition.

8. Procédé selon l'une des revendications précédentes, comprenant un procédé mené au niveau d'un dispositif de communication consistant à :

recevoir (402) un signal de communication sans fil ;

réaliser (404) une égalisation de canal sur le signal de communication sans fil reçu afin de déterminer des informations d'égalisation de canal, les informations d'égalisation de canal modélisant l'environnement par lequel se déplace le signal de communication sans fil ; et,

émettre (426) les données de dispositif comprenant les informations d'égalisation de canal vers le dispositif informatique central (130).

9. Procédé selon la revendication 8, dans lequel la réalisation d'une égalisation de canal sur le signal de communication sans fil reçu consiste à :

réaliser (420) un décodage en treillis sur le signal de communication sans fil reçu afin d'obtenir un trajet en treillis, et dans lequel les informations d'égalisation de canal comprennent le trajet de treillis.

10. Procédé selon la revendication 9, dans lequel la réalisation d'un décodage en treillis sur le signal de communication sans fil reçu afin d'obtenir un trajet en treillis consiste à :

sortir (422) un trajet en treillis de décodage entropique minimum qui représente un décodage requis pour extraire des informations du signal de communication sans fil avec un taux d'erreurs binaires minimum.

11. Procédé selon l'une quelconque des revendications 8 à 10, dans lequel la réalisation d'une égalisation de canal sur le signal de communication sans fil reçu consiste à :

appliquer (414) un filtre adaptatif afin d'égaliser de façon adaptative des effets de canal dans le signal de communication sans fil reçu, les informations d'égalisation de canal comprenant des coefficients de filtre adaptatif obtenus du filtre adaptatif,

et dans lequel l'application d'un filtre adaptatif pour égaliser de façon adaptative les effets de canal dans le signal de communication sans fil reçu consiste à :

réaliser un filtrage passe-bande (406) du signal de communication sans fil reçu ;

réaliser (408) une récupération temporelle pour extraire des informations de synchronisation de trame de données ;

utiliser (410) les informations de temporisation de trame de données pour identifier un signal d'informations et un signal de référence dans le signal de communication sans fil reçu ;

apprendre (412) au filtre adaptatif, à l'aide du signal de référence, à supprimer le bruit de canal ; et,

sortir (416) les coefficients du filtre adaptatif.

12. Système radar basé sur une communication pour identifier une condition dans un environnement physique comprenant des objets au moyen d'un ou de plusieurs dispositifs de communication (120), dont chacun est conçu pour recevoir un signal de communication sans fil émis par une source, le système comprenant un dispositif informatique central (130) qui comprend :

un composant (330) de réception de données de dispositif conçu pour recevoir, en provenance de chaque dispositif de communication (120), des données de dispositif comprenant des informations d'égalisation de canal, les informations d'égalisation de canal étant déterminées par le dispositif qui réalise une égalisation de canal sur un signal de communication sans fil reçu par le dispositif de communication (120), dans lequel les informations d'égalisation de canal modélisent le canal par lequel se déplace le signal de communication sans fil ;

un composant (340) de génération d'estimation conçu pour utiliser les données de dispositif reçues pour générer une estimation de l'environnement y compris en utilisant les informations d'égalisation de canal ; et,

un composant (342) d'enregistrement conçu pour enregistrer des changements de l'estimation générée de l'environnement au fil du temps de façon à surveiller des changements de l'environnement, consistant à classer des motifs dans l'estimation de l'environnement en comparant (436) l'estimation de l'environnement avec des estimations de l'environnement mémorisées correspondant à une condition connue, et, sur la base de la comparaison, à identifier (438) la condition dans l'environnement comprenant la présence ou l'absence d'un objet dans l'environnement.

13. Système selon la revendication 12, dans lequel chaque dispositif de communication (120) comprend :

un composant (302) de réception de signal de communication sans fil conçu pour recevoir le signal de communication sans fil ;

un composant (304) d'égalisation de canal conçu pour réaliser une égalisation de canal sur le signal de communication sans fil reçu afin de déterminer des informations d'égalisation de canal ; et,

un composant (326) d'émission de données de dispositif conçu pour émettre les données de dispositif comprenant les informations d'égalisation de canal vers le dispositif informatique central (130) pour générer l'estimation de l'environnement.

TRANSMITTER
102

CHANNEL
104

RECEIVER
106

100

Figure 1

200

150

130

132

142

120

142

140

142

120

142

142

142

120

120

142

202

120

120

Figure 2

| PROCESSOR 301 | WIRELESS COMMUNICATION SIGNAL RECEIVING COMPONENT 302 | GEOGRAPHICAL LOCATION DETERMINING COMPONENT 324 | MEMORY COMPONENT 303 |
|---|---|---|---|

| BAND-PASS FILTER 306 | TRAINING COMPONENT 312 | ADAPTIVE FILTERING COMPONENT 314 | TRELLIS DECODER 320 |
|---|---|---|---|
| TIME RECOVERY COMPONENT 308 | DECISION FEEDBACK EQUALISER 318 | COEFFICIENT OUTPUT COMPONENT 316 | TRELLIS PATH OUTPUT COMPONENT 322 |

IDENTIFICATION COMPONENT 310

CHANNEL EQUALISING COMPONENT 304

DEVICE DATA TRANSMITTING COMPONENT 326

COMMUNICATION DEVICE 120

| DEVICE DATA RECEIVING COMPONENT 330 | MEMORY COMPONENT 333 | ESTIMATE GENERATING COMPONENT 340 |
|---|---|---|
| INCORPORATING COMPONENT 332 | | RECORDING COMPONENT 342 |
| TRAINING DATA RECEIVING COMPONENT 334 | PROCESSOR 331 | PATTERN CLASSIFICATION COMPONENT 344 |
| LABELLING COMPONENT 336 | | COMPARISON COMPONENT 346 |
| STORING COMPONENT 335 | OUTPUT COMPONENT 350 | IDENTIFICATION COMPONENT 348 |
| | | ASIN COMPONENT 338 |

CENTRAL COMPUTING DEVICE 130

300 ↗

Figure 3

| COMMUNICATION DEVICE 120 | CENTRAL COMPUTING DEVICE 130 |
|---|---|
| RECEIVES WIRELESS COMMUNICATION SIGNAL 402 | RECEIVES DEVICE DATA 428 |
| PERFORMS CHANNEL EQUALISATION ON RECEIVED WIRELESS COMMUNICATION SIGNAL 404 | INCORPORATES RECEIVED DEVICE DATA INTO A MODEL 430 |
| BAND-PASS FILTERS THE RECEIVED WIRELESS COMMUNICATION 406 | GENERATES AN ESTIMATE OF THE ENVIRONMENT 432 |
| PERFORMS TIME RECOVERY 408 | RECORDS CHANGES IN THE ESTIMATED ENVIRONMENT 434 |
| IDENTIFIES REFERENCE SIGNAL 410 | COMPARES ESTIMATE OF THE ENVIRONMENT TO STORED ESTIMATES 436 |
| TRAINS ADAPTIVE FILTER 412 | IDENTIFIES A CONDITION BASED ON THE COMPARISON 438 |
| APPLIES ADAPTIVE FILTER 414 | OUTPUTS INFORMATION RELATING TO THE IDENTIFIED CONDITION 440 |
| OUTPUTS FILTER COEFFICIENTS 416 | |
| SUPPRESSES BIT ERROR RATE 418 | |
| PERFORMS TRELLIS DECODING 420 | |
| OUTPUTS TRELLIS PATH 422 | |
| DETERMINES GEOGRAPHICAL LOCATION 424 | |
| TRANSMITS DEVICE DATA 426 | |

400

Figure 4

Figure 5

PCA INDEX 1&2 COMPARISON

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1506665 A
- EP 2429228 A1
- US 5751766 A
- KR 20120136128 A

**Non-patent literature cited in the description**

- **H. GRIFFITHS ; C. BAKER.** Passive coherent location radar systems. part 1: performance prediction. *Radar, Sonar and Navigation, IEE Proceedings,* 2005, vol. 152 (3), 153-159
- **M. INGGS ; C. TONG.** Commensal radar using separated reference and surveillance channel configuration. *Electronics Letters,* 2012, vol. 48 (18), 1158-1160